# EUROPÄISCHE PATENTANMELDUNG

(11) **EP 3 358 098 A1**
(43) Veröffentlichungstag der Anmeldung: **08.08.2018**
(21) Anmeldenummer: 18154577.3
(22) Anmeldetag: 01.02.2018
(51) Int. Cl.: E04D 12/00, B32B 37/15, C14C 11/00, D06N 5/00

(54) **DACHUNTERSPANNBAHN**

(30) Priorität: 01.02.2017 DE 102017101969
(71) Anmelder: Monier Roofing Components GmbH, 61440 Oberursel (DE)
(72) Erfinder: Mawson, Christopher, 58706 Menden (DE)
(74) Vertreter: Grundmann, Dirk

(57) **Zusammenfassung**

Die Erfindung betrifft eine Dachunterspannbahn (1) mit einer auf einem flächigen Träger (3) aufgebrachten Beschichtung (2), deren Oberfläche unregelmäßig angeordnete, sich ungeradlinig erstreckende und sich kreuzende Gräben (4) aufweist, wobei die sich kreuzenden Gräben (4) zwischen sich Inseln (9) belassen, so dass die Textur ein lederähnliches Erscheinungsbild aufweist, um den Wasserablauf zu verbessern, die Rutschgefahr zu vermindern und die Dampfdurchlässigkeit zu verbessern. Beim Fertigungsverfahren wird eine Prägewalze (6) verwendet, wie sie bei der Herstellung von Kunstleder verwendet wird.

## Beschreibung

### Gebiet der Technik

Die Erfindung betrifft eine Dachunterspannbahn mit einer auf einem flächigen Träger aufgebrachten Beschichtung, die eine Textur mit durch sich kreuzenden Gräben gebildeten Inseln aufweist.

Die Erfindung betrifft darüber hinaus auch ein Verfahren zur Herstellung einer derartigen Dachunterspannbahn und die Verwendung einer Prägewalze zur Herstellung der Dachunterspannbahn.

### Stand der Technik

Eine gattungsgemäße Dachunterspannbahn wird in der DE 40 12 718 A1 beschrieben. Ein Spinnvlies wird auf der Basis von Polyesterfasern gefertigt und Schmelzbinder verfestigt. Zur Vermeidung der Rutschgefahr wird in eine derart verfestigte Spinnvliesbahn eine Struktur in Form eines Webmusters bspw. in Form einer Atlasbindung oder Leinwandbindung eingeprägt. Dadurch entstehen regelmäßig angeordnete Inseln, die von geradlinig verlaufenden Gräben voneinander getrennt sind. Anschließend erhält die Spinnvliesbahn eine dünne Beschichtung, durch die das Webmuster sichtbar ist.

Dachunterspannbahnen sind auch aus der DE 10 2013 108 521 A1 bekannt. Eine Dachunterspannbahn besitzt einen mehrschichtigen Aufbau. Ein flächiger Träger, der von einem Gewebe, einem Vlies oder einem Gewirke gebildet sein kann, bildet ein mechanisch stabilisierendes flächiges Substrat für die Dachunterspannbahn. Auf den Träger wird eine Funktionsschicht aufgebracht, die der Dachunterspannbahn eine Wasserdichtigkeit, aber eine Wasserdampfdurchlässigkeit verleiht. Eine Dachunterspannbahn wird vor dem Eindecken eines Daches auf die Sparren oder auf eine Schalung aufgebracht. Anschließend wird auf die Dachunterspannbahn eine Konterlattung und eine Lattung aufgebracht. Bei Dächern, die mit Schieferplatten eingedeckt werden oder bei der Verwendung der Dachunterspannbahn an einer Wandverkleidung, die mit Schieferplatten versehen wird, wird die Dachunterspannbahn auf eine Schalung aufgebracht. Insbesondere bei einem Steildach wird die Dachunterspannbahn beim Anbringen der Schieferplatten vom Dachdecker betreten. Die Dachunterspannbahn wird darüber hinaus auch als provisorische Dacheindeckung verwendet und ist der Witterung ausgesetzt. Die Dachunterspannbahn soll darüber hinaus eine sehr große Wasserdampfdurchlässigkeit aufweisen.

Die WO 97/30244, die DE 42 23 761 A1 und die DE 20 2007 018668 U1 beschreiben ebenfalls Dachunterspannbahnen, die beschichtet sein können bzw. bei denen die Beschichtung eingeprägte Inseln aufweisen kann.

### Zusammenfassung der Erfindung

Der Erfindung liegt die Aufgabe zugrunde, eine gattungsgemäße Dachunterspannbahn vor dem Hintergrund der an sie gestellten technischen Anforderungen gebrauchsvorteilhaft weiterzubilden.

Gelöst wird die Aufgabe durch die in den Ansprüchen angegebene Erfindung, wobei die Unteransprüche vorteilhafte Weiterbildungen der nebengeordneten Ansprüche darstellen, aber gleichzeitig auch eigenständige Lösungen der Aufgabe sind.

Zunächst und im Wesentlichen wird vorgeschlagen, dass die Textur der auf den Träger aufgebrachten Beschichtung unregelmäßig angeordnete, sich ungeradlinig erstreckende Gräben aufweist. Zwischen den Gräben verbleiben Inseln mit einer unregelmäßigen Randstruktur, die von den sich kreuzenden Gräben voneinander getrennt sind. Das zur Fertigung einer derartigen Dachunterspannbahn vorgeschlagene Verfahren sieht die Verwendung einer Prägewalze vor, die auf ihrer Oberfläche eine Negativtextur aufweist, die aus unregelmäßig angeordneten, sich ungeradlinig erstreckenden Rippen besteht. Bei der Fertigung der Dachunterspannbahn wird auf den vorgefertigten Träger, der ein Vlies, ein Gewebe oder ein Gewirke sein kann, ein Polymer aufgebracht. Es handelt sich dabei um eine viskose Masse, in die im noch nicht erstarrten Zustand die erfindungsgemäße Textur eingeprägt werden kann. Hierzu wird auf den Träger die viskose Masse aufgebracht oder die viskose Masse wird in einen Spalt zwischen Träger und Prägewalze eingebracht. Die Rippen der Prägewalze verformen die noch nicht erstarrte viskose Masse plastisch. Nach dem Erstarren verbleibt eine elastische Beschichtung, die die erfindungsgemäße Textur aufweist. Die Tiefe der Gräben, die Weite der Gräben und der Abstand, insbesondere der mittlere Abstand zweier benachbarter Gräben ist vorzugsweise so gewählt, dass die Textur der Beschichtung ein lederähnliches Erscheinungsbild verleiht. Insofern kann eine Prägewalze verwendet werden, die auch bei der Fertigung von Kunstleder verwendet werden kann. Die Beschichtung kann eine Dicke besitzen, die im Bereich zwischen 200 und 600 µm liegt. Bevorzugt liegt die Beschichtungsdicke im Bereich zwischen 400 und 500 µm. Die Gesamtstärke der Dachunterspannbahn hängt dann im Wesentlichen von der Materialstärke des Trägers ab und kann zwischen 300 und 1.000 µm liegen, wobei eine bevorzugte Gesamtdicke zwischen 500 und 900 µm liegt. Die Gräben verlaufen derart unregelmäßig, ungerichtet und ungeradlinig, dass sich eine Vielzahl von Kreuzungspunkten der Gräben ausbildet. Es ergibt sich eine unregelmäßige Anordnung von Kreuzungspunkten, wobei die Tiefe der Gräben lokal voneinander verschieden ist, so dass die Gräben auch eine variable Grabentiefe aufweisen. Die Gräben, die von den Rippen der Prägewalze erzeugt werden, belassen zwischen sich die Inseln, die eine unregelmäßige Größe und eine unregelmäßige Umrisskontur aufweisen. Bei einer bevorzugten Ausführungsform liegt der kreisäquivalente Durchmesser der jeweils größten Inseln im Bereich 0,5 und 5 mm, bevorzugt in einem Bereich zwischen 1 und 3 mm. Wegen der Unregelmäßigkeit des Verlaufs der Gräben können bei der Prägung auch kleinste Inseln entstehen. Die mittlere Dichte der Inseln kann 4 bis 400 Inseln pro Quadratmeter betragen. In einer bevorzugten Variante liegen auf einem Quadratzentimeter neben sehr kleinen Inseln etwa 10 bis 50 Inseln, die einen kreisäquivalenten Durchmesser im Bereich zwischen 1 und 3 mm besitzen. Die Oberfläche kann auch zu mehr als 50 Prozent von solchen Inseln gebildet sein, die einen kreisäquivalenten Durchmesser im Bereich zwischen 0,5 und 5 mm aufweisen. Die erfindungsgemäße Oberfläche der Dachunterspannbahn ist rauer als die Oberfläche einer Dachunterspannbahn des Standes der Technik. Dies hat eine bessere Verteilung von Regenwasser zur Folge, wenn die Dachunterspannbahn als provisorische Dachabdeckung verwendet wird. Das Regenwasser verteilt sich gleichmäßig über die gesamte Fläche und sammelt sich nicht an Stellen an, an denen die Dachunterspannbahn bspw. durch eine Nagelung perforiert ist. Das Regenwasser fließt in vielen kleinen Rinnsalen über die Dachunterspannbahn und die Rinnsale vereinigen sich nicht, wie auf einer glatten Dachunterspannbahn, zu größeren Rinnsalen. Durch die Narbung der Oberfläche wird letztere auch weniger rutschig. Bei nassem Wetter bietet die genarbte Oberfläche einem Dachdecker größeren Halt. Darüber hinaus erweist sich die erfindungsgemäß genarbte Dachunterspannbahn auch als vorteilhaft bei eingetretenem Schneefall. Der sich auf der Dachunterspannbahn auflegende Schnee haftet besser an der Oberfläche der Dachunterspannbahn, so dass dessen Abrutschgefahr deutlich vermindert ist. Darüber hinaus wird durch die Narbung der Oberfläche auch ihre Reflektivität bei einer Sonneneinstrahlung deutlich reduziert, so dass sie insgesamt ein dunkleres Erscheinungsbild abgibt. Durch die Oberflächenstrukturierung vergrößert sich die der Umgebungsluft ausgesetzten Oberfläche. Dies führt zu einer verbesserten Wasserdampfdurchlässigkeit und dadurch auch zu einer besseren Austrocknung der Oberfläche bei nassem Wetter. Indem die in die nach außen freiliegende Oberseite der Beschichtung eingeprägte Textur das Erscheinungsbild eines genarbten Leders aufweist bilden die Gräben Wasserablaufkanäle, die in x-beliebigen Richtungen verlaufen und die eine ungleichmäßige Grabentiefe aufweist. Dies hat zur Folge, dass Regenwasser oder Kondenswasser verbessert abgeführt werden kann. Es wird insbesondere als vorteilhaft angesehen, wenn die Gräben entlang ihres jeweiligen Verlaufs eine variierende Grabentiefe aufweist. Durch die unregelmäßige Narbung entstehen innerhalb eines Grabens Hoch- und Tiefstellen. Die unregelmäßige Profilierung der Oberseite der Dachunterspannbahn fördert die Bildung großer Kondensationstropfen, die bei einem Steildach verbessert zur Traufe hin ablaufen können, so dass die Atmungsaktivität der wasserdampfdurchlässigen aber wasserundurchlässigen Dachunterspannbahn verbessert ist.

### Kurze Beschreibung der Zeichnungen

Im Folgenden wird die Erfindung anhand von Ausführungsbeispielen näher erläutert. Es zeigen:
- Fig. 1: schematisch eine auf einer Schalung eines Steildachs aufgebrachte Dachunterspannbahn 1, deren Beschichtung 2 nach außen weist,
- Fig. 2: vergrößert und grob schematisiert die Draufsicht auf die Textur der Beschichtung 2, die von Gräben 4 flankierte Inseln 9 aufweist,
- Fig. 3: schematisch einen Schnitt durch die Dachunterspannbahn und
- Fig. 4: schematisch das Fertigungsverfahren für die erfindungsgemäße Dachunterspannbahn.

### Beschreibung der Ausführungsformen

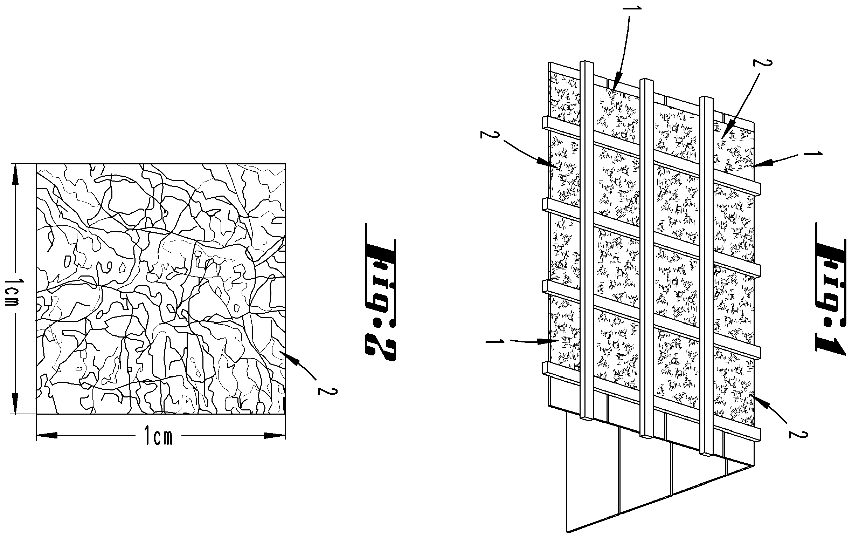

Die Figur 1 zeigt eine Schalung eines Steildachs, auf der eine Dachunterspannbahn 1 aufgebracht ist. Auf die Dachunterspannbahn 1 werden zunächst Konterlatten aufgebracht, die zwischen First und Traufe verlaufen. Auf die Konterlattung werden dann parallel zur Traufe bzw. parallel zum First verlaufende Dachlatten aufgebracht. Auf die Dachlatten werden dann die Dachsteine aufgelegt.

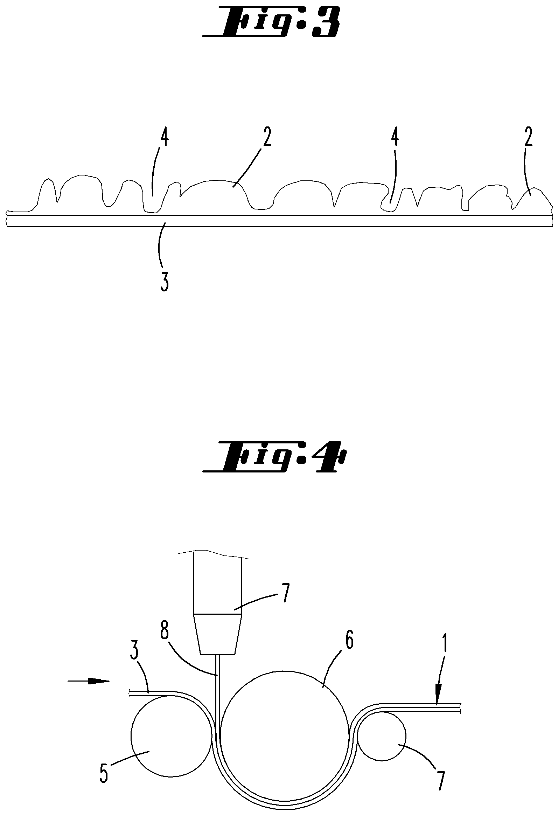

Die Figuren 2 und 3 zeigen vergrößert die Textur einer Beschichtung 2, die auf einen Träger 3 aufgebracht ist, wobei die Textur Gräben 4 aufweist, die unregelmäßig verlaufen, sich an vielen Kreuzungspunkten schneiden und eine nicht einheitliche Grabentiefe aufweisen.

Die Fertigung einer derartigen Dachunterspannbahn 1 erfolgt mit der in der Figur 4 schematisch dargestellten Vorrichtung. Ein Träger, bei dem es sich um ein Vlies, ein Gewebe oder ein Gewirke handeln kann, wird dort mit der Bezugsziffer 3 bezeichnet und mittels einer Walze 5 einer Beschichtungs-/Prägeeinrichtung zugeführt. Die Materialstärke des Trägers 3 kann im Bereich zwischen 100 µm und 1.000 µm liegen. Auf den Träger 3 oder beim Ausführungsbeispiel in den Spalt zwischen der Walze 5 und einer Prägewalze 6 wird auf die zur Prägewalze 6 weisende Oberseite des Trägers 3 ein Polymer 8 aufgebracht. Es handelt sich dabei um eine pastöse Masse 8, die mit einem Extruder 7 als Film auf den Träger 3 aufgebracht wird. Die Masse 8 kann im heißen Zustand plastisch verformbar sein und beim Abkühlen derart erstarren, dass eine flexible Beschichtung 2 verbleibt. Die pastöse Masse 8 kann die Eigenschaften eines Heißklebers und/oder die Eigenschaften eines Thermoplasten aufweisen.

Die Prägewalze 6 besitzt eine zylinderförmige Prägefläche, die eine Vielzahl von Rippen aufweist, die unterschiedliche Höhen besitzen und die ungeradlinig und ungleichmäßig verlaufen. Die Rippen kreuzen sich, so dass muldenförmige Vertiefungen ausgebildet sind. Die größten muldenförmigen Vertiefungen haben etwa einen äquivalenten Kreisdurchmesser von 1 mm bis 2 mm.

Die Rippen der Prägewalze 6 prägen in die plastisch verformbare, auf den Träger 3 aufgebrachte Masse 8 die in der Figur 3 bzw. der Figur 2 dargestellte Grabenstruktur, so dass sich zwischen einzelnen, sich kreuzenden Gräben 4 inselförmige Erhebungen ausbilden. Die dadurch gebildeten Inseln 9 besitzen eine unregelmäßige Umfangskontur und eine unregelmäßige Fläche bzw. einen unregelmäßigen äquivalenten Kreisdurchmesser.

Die Anordnung der Rippen auf der Prägewalze 6 ist so gewählt, dass die Oberfläche der Beschichtung 2 eine Textur erhält, die der Dachunterspannbahn 1 ein lederähnliches Erscheinungsbild verleiht. Insofern ist es von Vorteil, dass zur Fertigung der Dachunterspannbahn 1 eine Prägewalze 6 verwendet werden kann, wie sie auch bei der Herstellung von Kunstleder verwendet wird.

Die Erfindung betrifft somit auch eine Verwendung einer ansonsten für die Herstellung von Kunstleder vorgesehene Prägewalze 6 zur Herstellung einer Dachunterspannbahn 1.

Die erfindungsgemäße Dachunterspannbahn 1 hat die folgenden Vorteile: Sie besitzt gegenüber dem Stand der Technik eine bessere Haptik und eine verbesserte Optik. Dem die Dachunterspannbahn 1 Verlegenden wird das Gefühl vermittelt, man gäbe dem Dach eine Lederhaut. Durch die unregelmäßige Narbung entstehen Hoch- und Tiefstellen. Die Elastizität der Beschichtung 2 ist hierdurch deutlich verbessert. Die Dachunterspannbahn 1 ist aufgrund der erfindungsgemäßen Textur sehr beständig, sehr robust, atmungsaktiv, hochwertig sowie dauerhaft. Darüber hinaus bietet die erfindungsgemäße Textur auch sicherheitstechnische Vorteile, weil die Rutschgefahr, insbesondere für Schneelasten, aber auch für Personen deutlich vermindert ist. Schließlich ist die erfindungsgemäße Dachunterspannbahn 1 auch hinsichtlich des Wasserablaufs von Vorteil, weil das Wasser gleichmäßiger über die Oberfläche abfließt.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Dachunterspannbahn 1, die dadurch gekennzeichnet ist, dass die Textur unregelmäßig angeordnete, sich ungeradlinig erstreckende und sich kreuzende Gräben 4 aufweist.

Eine Dachunterspannbahn 1, die gekennzeichnet ist durch von den sich kreuzenden Gräben 4 gebildete Inseln 9.

Eine Dachunterspannbahn 1, die dadurch gekennzeichnet ist, dass die Textur ein lederähnliches Erscheinungsbild aufweist.

Eine Dachunterspannbahn 1, die dadurch gekennzeichnet ist, dass der Träger 3 ein Vlies, ein Gewebe oder ein Gewirke ist.

Eine Dachunterspannbahn 1, die dadurch gekennzeichnet ist, dass die Textur durch Prägen erzeugt ist.

Eine Dachunterspannbahn 1, die dadurch gekennzeichnet ist, dass die Beschichtung 2 eine wasserdampfdurchlässige, aber wasserdichte Polymerschicht ist.

Eine Dachunterspannbahn 1, die dadurch gekennzeichnet ist, dass die Dachunterspannbahn 1 eine Materialstärke zwischen 300 und 1.000 µm, bevorzugt eine Materialstärke zwischen 500 und 900 µm aufweist.

Eine Dachunterspannbahn 1, die dadurch gekennzeichnet ist, dass die Beschichtung 2 eine Dicke im Bereich zwischen 200 und 600 µm und insbesondere zwischen 400 und 500 µm aufweist.

Eine Dachunterspannbahn 1, die dadurch gekennzeichnet ist, dass die Inseln 9 einen maximalen kreisäquivalenten Durchmesser von 5 mm besitzen.

Eine Dachunterspannbahn 1, die dadurch gekennzeichnet ist, dass die Oberfläche zu mehr als 50 Prozent von Inseln 9 gebildet ist, die einen kreisäquivalenten Durchmesser zwischen 0,5 und 5 mm aufweisen und die übrigen 50 Prozent von kleineren Inseln 9 und Gräben 4 gebildet sind.

Eine Dachunterspannbahn 1, die dadurch gekennzeichnet ist, dass die Oberfläche der Beschichtung 2 gemittelt 10 bis 50 Inseln 9 pro Quadratzentimeter aufweist, deren kreisäquivalente Durchmesser im Bereich zwischen 1 und 3 mm liegt.

Ein Verfahren, das gekennzeichnet ist durch einen flächigen Träger 3, der mit einer viskosen Masse 8 beschichtet wird, die zu einer elastischen Beschichtung 2 erstarrt, wobei vor dem Erstarren der Masse 8 mit einer eine strukturierte Oberfläche aufweisenden Prägewalze 6 in die Oberfläche der Beschichtung 2 eine Textur eingeprägt wird, wobei die Oberfläche der Prägewalze 6 unregelmäßig angeordnete und sich ungeradlinig erstreckende Rippen aufweist.

Ein Verfahren, das dadurch gekennzeichnet ist, dass die viskose Masse 8 mittels eines Extruders 7 auf den Träger 3 aufgebracht oder in einen Spalt zwischen Träger 3 und Prägewalze 6 eingebracht wird.

Eine Verwendung, die gekennzeichnet ist durch eine Prägewalze 6 zur Herstellung einer Dachunterspannbahn 1.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Liste der Bezugszeichen

- 1: Dachunterspannbahn
- 2: Beschichtung
- 3: Träger
- 4: Graben
- 5: Walze
- 6: Prägewalze
- 7: Extruder
- 8: pastöse Masse
- 9: Insel

## Patentansprüche

1. Dachunterspannbahn (1) mit einer auf einem flächigen Träger (3) aufgebrachten Beschichtung (2), die eine Textur mit durch sich kreuzende Gräben (4) gebildeten Inseln (9) aufweist, **dadurch gekennzeichnet, dass** die Gräben (4) in die Beschichtung (2) eingeprägt sind und derart unregelmäßig angeordnet sind, und sich ungeradlinig erstrecken, dass die Textur ein lederähnliches Erscheinungsbild aufweist.

2. Dachunterspannbahn nach Anspruch 1, **dadurch gekennzeichnet, dass** der Träger (3) ein Vlies, ein Gewebe oder ein Gewirke ist.

3. Dachunterspannbahn nach einem der vorhergehenden Ansprüche, **dadurch gekennzeichnet, dass** die Beschichtung (2) eine wasserdampfdurchlässige, aber wasserdichte Polymerschicht ist.

4. Dachunterspannbahn nach einem der vorhergehenden Ansprüche, **dadurch gekennzeichnet, dass** die Dachunterspannbahn (1) eine Materialstärke zwischen 300 und 1.000 µm, bevorzugt eine Materialstärke zwischen 500 und 900 µm aufweist.

5. Dachunterspannbahn nach einem der vorhergehenden Ansprüche, **dadurch gekennzeichnet, dass** die Beschichtung (2) eine Dicke im Bereich zwischen 200 und 600 µm und insbesondere zwischen 400 und 500 µm aufweist.

6. Dachunterspannbahn nach einem der vorhergehenden Ansprüche, **dadurch gekennzeichnet, dass** die Inseln (9) einen maximalen kreisäquivalenten Durchmesser von 5 mm besitzen.

7. Dachunterspannbahn nach einem der vorhergehenden Ansprüche, **dadurch gekennzeichnet, dass** die Oberfläche zu mehr als 50 Prozent von Inseln (9) gebildet ist, die einen kreisäquivalenten Durchmesser zwischen 0,5 und 5 mm aufweisen und die übrigen 50 Prozent von kleineren Inseln (9) und Gräben (4) gebildet sind.

8. Dachunterspannbahn nach einem der vorhergehenden Ansprüche, **dadurch gekennzeichnet, dass** die Oberfläche der Beschichtung (2) gemittelt 10 bis 50 Inseln (9) pro Quadratzentimeter aufweist, deren kreisäquivalente Durchmesser im Bereich zwischen 1 und 3 mm liegt.

9. Verfahren zur Herstellung einer Dachunterspannbahn (1) gemäß einem der vorhergehenden Ansprüche, wobei ein flächiger Träger (3) mit einer viskosen Masse (8) beschichtet wird, die zu einer elastischen Beschichtung (2) erstarrt, wobei vor dem Erstarren der Masse (8) mit einer eine strukturierte Oberfläche aufweisenden Prägewalze (6) in die Oberfläche der Beschichtung (2) eine Textur eingeprägt wird, wobei die Oberfläche der Prägewalze (6) unregelmäßig angeordnete und sich ungeradlinig erstreckende Rippen aufweist.

10. Verfahren nach Anspruch 11, **dadurch gekennzeichnet, dass** die viskose Masse (8) mittels eines Extruders (7) auf den Träger (3) aufgebracht oder in einen Spalt zwischen Träger (3) und Prägewalze (6) eingebracht wird.

11. Verwendung einer ansonsten für die Fertigung von Kunstleder verwendeten Prägewalze (6) zur Herstellung einer Dachunterspannbahn (1) gemäß einem der Ansprüche 1 bis 8.

12. Dachunterspannbahn oder Verfahren oder Verwendung, **gekennzeichnet durch** eines oder mehrere der kennzeichnenden Merkmale eines der vorhergehenden Ansprüche.
